## Europäisches Patentamt
## European Patent Office
## Office européen des brevets

(11) Veröffentlichungsnummer: **0 223 931**
**B1**

(12) **EUROPÄISCHE PATENTSCHRIFT**

(45) Veröffentlichungstag der Patentschrift:
**12.04.89**

(21) Anmeldenummer: **86111700.0**

(22) Anmeldetag: **23.08.86**

(51) Int. Cl.⁴: **B60K 15/04**

(54) Einfüllstutzen für einen Kraftstoffbehälter, insbesondere für Kraftfahrzeuge.

(30) Priorität: **16.11.85 DE 3540740**

(43) Veröffentlichungstag der Anmeldung:
**03.06.87 Patentblatt 87/23**

(45) Bekanntmachung des Hinweises auf die Patenterteilung:
**12.04.89 Patentblatt 89/15**

(84) Benannte Vertragsstaaten:
**DE FR GB IT NL SE**

(56) Entgegenhaltungen:
**DE-A- 2 952 175**
**DE-B- 1 175 097**
**US-A- 3 187 936**
**US-A- 3 800 978**

(73) Patentinhaber: **Dr.Ing.h.c. F. Porsche**
**Aktiengesellschaft, Porschestrasse 42,**
**D-7000 Stuttgart 40(DE)**

(72) Erfinder: **Fischer, Roland, Dipl.-Ing. FH, Jahnstrasse 13,**
**D-8304 Mallersdorf(DE)**

ACTORUM AG

**Beschreibung**

Der Erfindung betrifft einen Einfüllstutzen für einen Kraftstoffbehälter, insbesondere für Kraftfahrzeuge, mit einer beim Betanken wirksamen Entlüftungseinrichtung, die einerseits mit dem Einfüllstutzen und andererseits mit dem Kraftstoffbehälter verbunden ist und über den Einfüllstutzen verläuft.

Bei einem bekannten Einfüllstutzen der eingangs genannten Gattung (DE-A 2 952 175) verläuft die Entlüftungseinrichtung etwa parallel und mit geringem Abstand zum darunterliegenden Einfüllstutzen, wobei die Entlüftungseinrichtung von ihrem behälterseitigen Ende bis zur Einmündung in den Einfüllstutzen einen gleichbleibenden Querschnitt aufweist. Der Einfüllstutzen besitzt unterhalb einer Zapfpistolenabstützung einen größeren Durchmesser als die Zapfpistole. Im Bereich der Zapfpistolenabstützung und einem benachbart angeordneten Paßstück ist hingegen bei eingeführter Zapfpistole nur ein relativ kleiner Austrittsspalt für die ausweichende Luft vorgesehen.

Dieser Anordnung haftet der Nachteil an, daß beim Betanken die im Behälter vorhandene und durch das Kraftstoffvolumen verdrängte Luft zwar durch die Entlüftungseinrichtung und gegebenenfalls durch den Einfüllstutzen in Richtung Zapfpistolenabstützung strömen kann, daß jedoch dort wegen des zu kleinen Austrittsspaltes ein Rückstau entsteht. Dadurch schaltet entweder die Zapfpistole unerwünscht ab oder aber es tritt Kraftstoff aus dem Einfüllstutzen heraus.

Da die Lage des behälterseitigen Endes der Entlüftungseinrichtung die maximale Füllstandshöhe des Kraftstoffbehälters bestimmt, bleibt bei dieser Anordnung ein relativ großes, oberhalb der maximalen Füllstandshöhe liegendes Behältervolumen ungenutzt.

Aufgabe der Erfindung ist es, an einem Einfüllstutzen solche Vorkehrungen zu treffen, daß bei optimaler Nutzung des Kraftstoffbehältervolumens ein funktionsgerechtes Entlüften beim Betanken stattfindet.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung eines Entspannungsraumes an der Entlüftungseinrichtung und durch den Verbindungskanal zwischen Entspannungsraum und Einfüllstutzen ein einwandfreies Entlüften beim Betanken gewährleistet ist – kein unerwünschtes Abschalten der Zapfpistole vor Beendigung des Füllvorganges und auch kein Kraftstoffaustritt –. Dies wird dadurch erzielt, daß die durch das Kraftstoffvolumen aus dem Kraftstoffbehälter verdrängte Luft und eventuell mitgeführte Kraftstoffpartikel im Bereich des Entspannungsraumes eine Geschwindigkeitsreduzierung erfahren, wodurch sich die Kraftstoffpartikel nach unten hin absetzen, während die Luft durch die Entlüftungseinrichtung und den Entlüftungsstutzen ungehindert entweichen kann. Die Kraftstoffpartikel fließen durch den Verbindungskanal wieder in den Einfüllstutzen und danach in den Kraftstoffbehälter zurück. Eine venturiartige Einschnürung unterhalb des Verbindungskanales bewirkt eine Sogwirkung, wodurch beim Betanken die Kraftstoffrückführung unterstützt wird. Durch die Anordnung des behälterseitigen Endes der Entlüftungseinrichtung benachbart der oberen Begrenzungswand wird das Volumen des Kraftstoffbehälters gut ausgenutzt. Die einstückige Ausbildung von Einfüllstutzen, Entlüftungseinrichtung und Entspannungsraum reduziert die Herstellungs- und Montagekosten beträchtlich.

Ein Ausführungsbeispiel der Erfindung ist in den Zeichnungen dargestellt und wird im folgenden näher beschrieben.

Es zeigt

Fig. 1 eine Ansicht auf den erfindungsgemäßen Einfüllstutzen, teilweise im Schnitt,
Fig. 2 einen Schnitt nach der Linie II–II der Fig. 1 in größerem Maßstab,

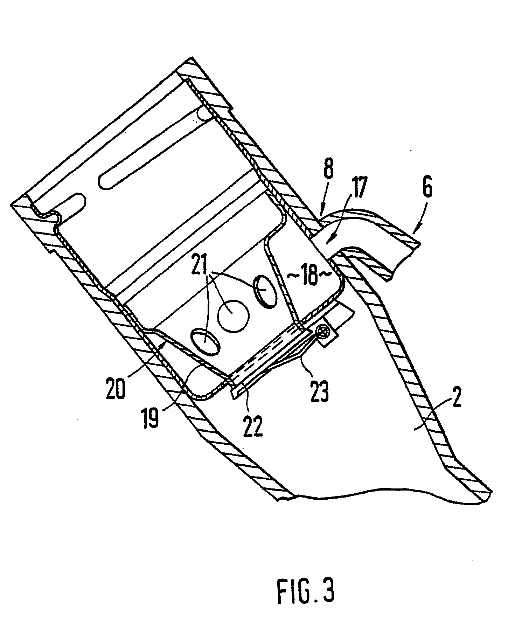

Fig. 3 einen Schnitt nach der Linie III–III der Fig. 1 in größerem Maßstab.

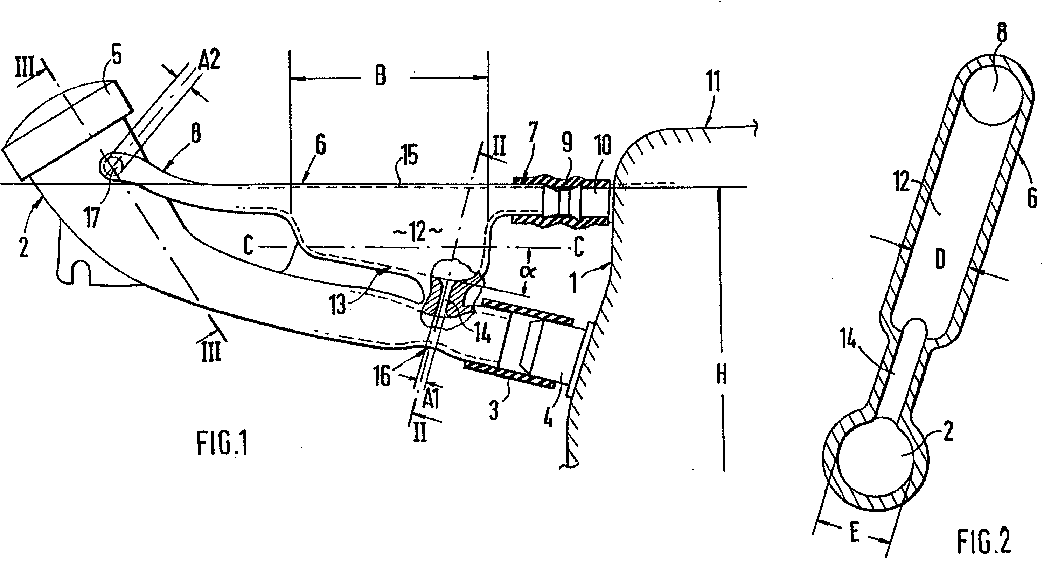

In Fig. 1 ist der obere Bereich eines Kraftstoffbehälters 1 abschnittsweise dargestellt, der mit einem Einfüllstutzen 2 versehen ist. Der Einfüllstutzen 2 ist unter Vermittlung einer elastischen Muffe 3 mit einem Anschlußstutzen 4 des Kraftstoffbehälters 1 verbunden. Auf das entfernt vom Kraftstoffbehälter 1 liegende Ende des Einfüllstutzens 2 ist ein Deckel 5 aufgeschraubt, wobei nach Lösen des Deckels 5 eine nicht näher dargestellte Zapfpistole in den Einfüllstutzen 2 einführbar ist.

Oberhalb des Einfüllstutzens 2 ist eine Entlüftungseinrichtung 6 angeordnet, die einerseits an den Einfüllstutzen 2 und andererseits an den Kraftstoffbehälter 1 angeschlossen ist. Die Entlüftungseinrichtung 6 weist an ihren beiden endseitigen Abschnitten 7, 8 jeweils einen rohrförmigen Querschnitt auf. Der dem Kraftstoffbehälter 1 zugekehrte endseitige Abschnitt 7 ist mittels einer elastischen Muffe 9 an einen Stutzen 10 des Kraftstoffbehälters 1 angeschlossen. Der Stutzen 10 und der endseitige Abschnitt 7 der Entlüftungseinrichtung 6 sind benachbart einer oberen, etwa waagrecht verlaufenden Begrenzungswand 11 des Kraftstoffbehälters angeordnet. Dadurch läßt sich ein wesentlicher Bereich der Höhe des Kraftstoffbehälters befüllen (Füllstandshöhe H).

Zur Erzielung einer guten Belüftung beim Betanken weist die Entlüftungseinrichtung 6 in einem Teilbereich B ihrer Längserstreckung eine sich zum darunterliegenden Einfüllstutzen 2 hin erstreckende Querschnittserweiterung auf, durch die ein Entspannungsraum 12 für die aus dem Kraftstoffbehälter 1 verdrängte Luft bzw. die mitgeführten Kraftstoffpartikel gebildet wird. Die Querschnittserweiterung ist insbesondere in vertikaler Richtung vorgesehen.

Im Entspannungsraum 12 tritt wegen der Querschnittserweiterung eine wesentliche Verringerung der Strömungsgeschwindigkeit der Luft bzw. der Kraftstoffpartikel auf. Dadurch werden die Kraftstoffpartikel nicht mehr von der Luft mitgeführt, sondern sammeln sich an einem Boden 13 des Entspannungsraumes 12 und werden durch einen an der tiefsten Stelle des Entspannungsraumes 12 angeordneten Verbindungskanal 14 in den Einfüllstutzen 2 und von dort in den Kraftstoffbehälter 1 zurückgeführt.

Gemäß Fig. 1 verläuft ein oberer Rand 15 des Entspannungsraumes 12 etwa waagrecht und in Verlängerung der beiden endseitigen Abschnitte 7, 8 der Entlüftungseinrichtung 6, wogegen der Boden 13 des Entspannungsraumes 12 unter einem spitzen Winkel α zu einer horizontalen Ebene C–C geneigt ist.

Entsprechend Fig. 2 ist die Breite D des Entspannungsraumes 12 geringfügig kleiner als der Innendurchmesser E des Einfüllstutzens 2.

Der Verbindungskanal 14 verläuft etwa aufrecht zu einem darunterliegenden Abschnitt des Einfüllstutzens 2 auf und weist einen Querschnitt A1 auf, der kleiner ist als der Querschnitt A2 der Entlüftungseinrichtung 6 im Bereich des Eintritts in den Einfüllstutzen 2. Der dem Einfüllstutzen 2 zugekehrte Endbereich 8 der Entlüftungseinrichtung 6 liegt auf einem höheren Niveau als der endseitige Abschnitt 7 bzw. der Stutzen 10 des Kraftstoffbehälters.

Zur Unterstützung der Kraftstoffrückführung beim Betanken ist am Einfüllstutzen 2 im Bereich des Verbindungskanals 14 eine venturiartige Einschnürung 16 vorgesehen.

Aus Herstellungs- und Montagegründen ist der Einfüllstutzen 2, die Entlüftungseinrichtung 6 und der Entspannungsraum 12 vorzugsweise einstückig ausgeführt. Vorteilhafterweise erfolgt die Herstellung dieser Baueinheit nach dem Blasverfahren. Es besteht aber auch die Möglichkeit, daß der Einfüllstutzen 2, die Entlüftungsvorrichtung 6 und eventuell auch der Entspannungsraum 12 separate Bauteile sind, die nachträglich miteinander verbunden werden.

Der Einfüllstutzen 2 weist unterhalb des Entspannungsraumes 12 etwa den Querschnitt des Mündungsbereiches einer Zapfpistole auf, so daß durch den Einfüllstutzen 2 lediglich Kraftstoff in den Kraftstoffbehälter 1 hineinfließen kann.

Die verdrängte Luft im Kraftstoffbehälter 1 kann wiederum nur durch die Entlüftungseinrichtung 6 entweichen und strömt nach dem Entspannungsraum 12 über eine Öffnung 17 in einen innerhalb des Einfüllstutzens 2 angeordneten Ringraum 18, der nach oben und unten hin geschlossen ist. An einer inneren Wand 19 des den Ringraum 18 bildenden Einsatzes 20 sind mehrere Öffnungen 21 vorgesehen, durch die die Luft in Richtung Deckel 5 strömen kann. Der Einsatz 20 ist im Bereich der Öffnungen 21 konisch ausgebildet. Unterhalb des Einsatzes 20 ist eine Klappe 22 angeordnet, die beim Einführen einer Zapfpistole gegen die Wirkung einer Feder 23 nach unten hin verschwenkt wird.

## Patentansprüche

1. Einfüllstutzen für einen Kraftstoffbehälter, insbesondere für Kraftfahrzeuge, mit einer beim Betanken wirksamen rohrförmigen Entlüftungseinrichtung, die einerseits mit dem Einfüllstutzen und andererseits mit dem Kraftstoffbehälter verbunden ist und über dem Einfüllstutzen verläuft, dadurch gekennzeichnet, daß die rohrförmige Enlüftungseinrichtung (6) in einem mittleren Teilbereich (B) ihrer Längserstreckung eine einen Entspannungsraum (12) bildende Querschnittserweiterung aufweist, die sich nach unten hin zum Einfüllstutzen (2) erstreckt, wobei an der tiefsten Stelle des Entspannungsraumes (12) ein Verbindungskanal (14) zum Einfüllstutzen vorgesehen ist, und daß der Einfüllstutzen (2) unterhalb des Verbindungskanals (14) eine venturiartige Einschnürung (16) aufweist.

2. Einfüllstutzen nach Anspruch 1, dadurch gekennzeichnet, daß der Entspannungsraum (12) einstückig mit der Entlüftungseinrichtung (6) bzw. dem Einfüllstutzen (2) ausgebildet ist.

3. Einfüllstutzen nach Anspruch 1, dadurch gekennzeichnet, daß der Verbindungskanal (14) etwa aufrecht zum benachbarten Abschnitt des Einfüllstutzens (2) verläuft und sein Querschnitt (A1) kleiner ist als der Querschnitt (A2) der Entlüftungseinrichtung (6) im Bereich des Eintritts in den Einfüllstutzen (2).

4. Einfüllstutzen nach Anspruch 1, dadurch gekennzeichnet, daß ein Boden (13) des Entspannungsraumes (12) unter einem spitzen Winkel (α) zu einer Horizontalebene (C–C) geneigt ist.

5. Einfüllstutzen nach einem oder mehreren der vorangegangenen Ansprüche, dadurch gekennzeichnet, daß der Einfüllstutzen (2) mit der Entlüftungseinrichtung (6) und dem Entspannungsraum (12) im Blasverfahren hergestellt ist.

## Claims

1. An inlet for a fuel tank, in particular for automotive vehicles, with a tubular venting device which is effective when refuelling, is connected, on the one hand, to the inlet and, on the other hand, to the fuel tank and runs above the inlet, characterised in that the tubular venting device (6) has, in a central region (B) of its length an enlargement in cross-section which forms a release chamber (12) and extends downwards towards the inlet (2), a connecting duct (14) to the inlet being provided at the lowest point of the release chamber (12), and in that the inlet (2) has a venturi-type constriction (16) beneath the connecting duct (14).

2. An inlet according to claim 1, characterised in that the release chamber (12) is constructed integrally with the venting device (6) and the inlet (2).

3. An inlet according to claim 1, characterised in that the connecting duct (14) runs approximately upright to the adjacent portion of the inlet (2) and its cross-section (A1) is smaller than the cross-section (A2) of the venting device (6) in the region where it enters the inlet (2).

4. An inlet according to claim 1, characterised in that a base (13) of the release chamber (12) is inclined at an acute angle (α) to a horizontal plane (C–C).

5. An inlet according to one or more of the preceding claims, characterised in that the inlet (2) is produced with the venting device (6) and the release chamber (12) by the blowing method.

## Revendications

1. Pipe de remplissage pour un réservoir de carburant, en particulier pour véhicules automobiles, comportant un dispositif de désaérage tubulaire actif lors de ravitaillement, qui est relié d'une part à la pipe de remplissage et d'autre part au réservoir de carburant et s'étend au-dessus de la pipe de remplissage caractérisée en ce que le dispositif de désaérage tubulaire (6) présente dans une partie centrale (B) de son étendue longitudinale un agrandissement de section formant une chambre de détente (12) qui s'étend vers le bas jusqu'à la pipe de remplissage (2), un canal de liaison (14) aboutissant à la pipe de remplissage étant prévu au point le plus bas de la chambre de détente (12), et en ce que la pipe de remplissage (2) comporte un étranglement de type venturi (16) au-dessous du canal de liaison (14).

2. Pipe de remplissage selon la revendication 1, caractérisée en ce que la chambre de détente (12) est réalisée d'un seul tenant avec le dispositif de désaérage (6) et respectivement la pipe de remplissage (2).

3. Pipe de remplissage selon la revendication 1, caractérisée en ce que le canal de liaison (14) s'étend sensiblement verticalement jusqu'à la partie voisine de la pipe de remplissage (2) et sa section (A1) est inférieure à la section (A2) du dispositif de désaérage (6) dans la zone de l'entrée dans la pipe de remplissage (2).

4. Pipe de remplissage selon la revendication 1, caractérisée en ce qu'un fond (13) de la chambre de détente (12) est incliné d'un angle (α) aigu par rapport à un plan horizontal (C–C).

5. Pipe de remplissage selon une ou plusieurs des revendications précédentes, caractérisée en ce que la pipe de remplissage (2) est fabriquée avec le dispositif de désaérage (6) et la chambre de détente (12) par soufflage.

FIG.1

FIG.2

EP 0 223 931 B1

FIG.3